# EUROPEAN PATENT APPLICATION

(11) **EP 1 504 944 A1**
(43) Date of publication of application: **09.02.2005**
(21) Application number: 04017709.9
(22) Date of filing: 27.07.2004
(51) Int. Cl.: B60K 15/04

(54) **Siphonable poppet-type fill tube check valve**

(30) Priority: 06.08.2003 US 635291
(71) Applicant: EATON CORPORATION, Cleveland, Ohio 44114-2584 (US)
(72) Inventor: Martin, Charles J., Ann Arbor Michigan (US); Creager, Christopher W., Ypsilanti Michigan (US)
(74) Representative: Patentanwälte Rüger, Barthelt & Abel

(57) **Abstract**

A tubular poppet type check valve (10) for a fuel tank filler tube (60) having annular barbs (16) on the inlet end (14) for snap-in attachment in a non-metallic tank spud (54) and provisions for push-in connection with the end of a metallic spud (56) which is crimped over a groove (22). The poppet (30) has an annular groove (24) with an overmolded elastomeric seal (32) formed preferably with a wiper portion (34) for facilitating sealing on a valve seat (26). The poppet (30) has a post portion (36) slidably guided in an aperture (46) in the closure (38) provided in the downstream end of the valve. A slot (28) in the side of the valve body (12) allows a siphon hose inserted in the inlet (14) to exit the valve and feed through to the bottom of the tank. Deflector vanes (20) are provided in the inlet end (14) to direct a siphon hose to the outlet slot (28). The poppet (30) has turbulence reducing vanes (35) on the upstream side.

## Description

### BACKGROUND OF THE INVENTION

The present invention relates to one-way or check type valves employed in the filler tube for a motor vehicle fuel tank and which provide for positive closing of the filler tube to prevent fuel vapor escape upon withdrawal of a refueling nozzle from the filler tube. In addition, such valves must make provision for the insertion of a siphon hose for purposes of draining the tank in the event that this is required for servicing or repair of the vehicle.

In providing such check valves for a fuel tank filler tube, problems have been encountered in attaching the valve to a spud for attachment to the fuel tank. Problems have also been encountered in production and installation of the tank in orienting or aligning the valve such that upon insertion of a siphon hose in the filler tube the end of the siphon hose is directed downwardly toward the bottom of the fuel tank.

Furthermore, the check valve must be compatible with attachment and sealing to both metallic and non-metallic spuds for attachment to the fuel tank because the spuds are usually attached and sealed to the tank by weldment and the spud must therefore be formed of the same material as the fuel tank. Currently fuel tanks are made of either molded plastic material or stamped and welded sheet metal and thus spuds of both materials are widely employed.

In addition, where a one-way valve is employed in a fuel tank filler neck or tube for closing and sealing the filler tube upon removal of a refueling nozzle, it has been found difficult to provide for proper direction of the fuel flow during refueling with a valve that is biased to the closed position and thus it has been desired to improve the flow characteristics of such a valve when in the open position yet maintain a vapor tight seal of the valve when it is in the closed position. Furthermore it has been desired to provide a simple and economical way of attaching the valve to the fuel tanks spud without the need of separate tool in order to facilitate installation of the tank during assembly of the vehicle.

It has further been desired to improve the sealing characteristics of a fuel tank filler tube check valve and to reduce the cost of providing a positive vapor seal.

### BRIEF SUMMARY OF THE INVENTION

The present invention provides an improved one-way or check valve for a fuel tank filler tube which enables a single construction of the valve to be attached to either a metallic or non-metallic fuel tank filler spud of the type subsequently welded to the tank in a vapor tight seal with the valve outlet extending into the tank. The valve has a side opening oriented to direct a siphon hose inserted therein toward the bottom of the tank.

The valve body includes surfaces thereon providing for snap in engagement with a non-metallic tank filler spud and surfaces adapted for crimping of a metallic filler spud thereover.

The valve employs a poppet having an elastormeric seal overmolded thereon and includes a post extending downwardly from the poppet and slidably guided in a guide aperture provided in the lower end of the valve for ensuring positive seating and sealing of the poppet. The upstream face of the poppet has vanes thereon for improved flow direction during refueling and directing of a siphon hose inserted through the filler tube outwardly through the side opening in the valve body as the siphon hose pushes the poppet to the open position. The body includes vanes disposed in the interior thereof upstream of the poppet to deflect a siphon hose to one side of the poppet for facilitating directing of the end of the siphon hose to the bottom of the tank.

The present invention thus provides a simple obstruction which is easy to assemble in a fuel tank filler spud of either metallic or non-metallic material and which has an improved elastermeric seal over molded on a plastic poppet for vapor tight sealing in a closed position which provides a simple easy to install and reliable valve construction with relatively low manufacturing cost for high volume production.

### BRIEF DESCRIPTION OF THE DRAWINGS

FIG. 1 is a cross section of the valve assembly of the present invention;

FIG. 2 is an enlarged view of a portion of FIG. 1;

FIG. 3 is an exploded view of the valve of FIG. 1;

FIG. 4 is a view of the valve of FIG. 1 assembled into a non-metallic spud attached to a filler hose ready for attachment to a fuel tank; and

FIG. 5 is a portion of a view similar to FIG. 4 of the valve of FIG. 1 assembled into a metallic speed.

### DETAILED DESCRIPTION OF THE INVENTION

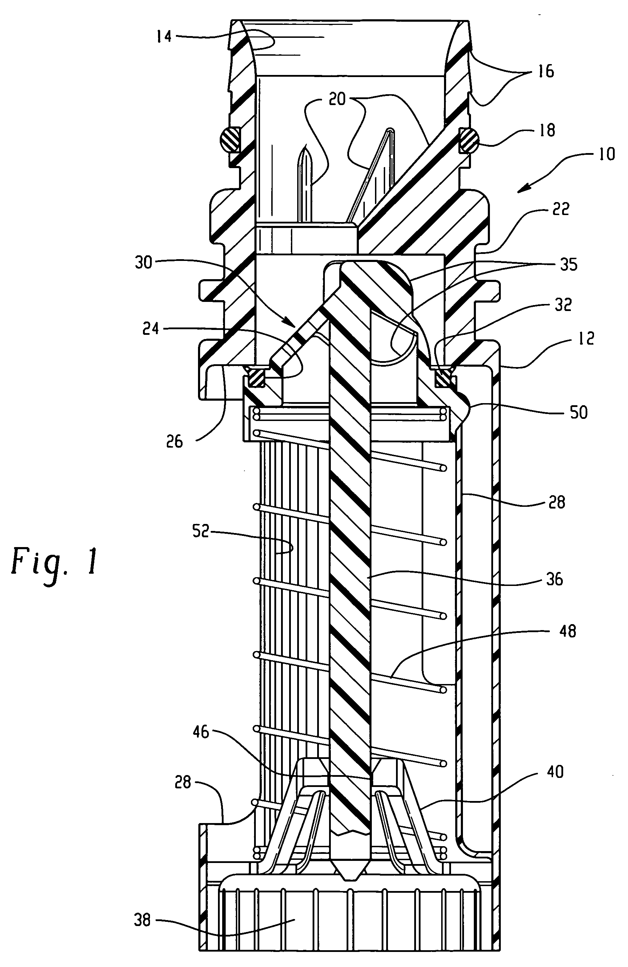

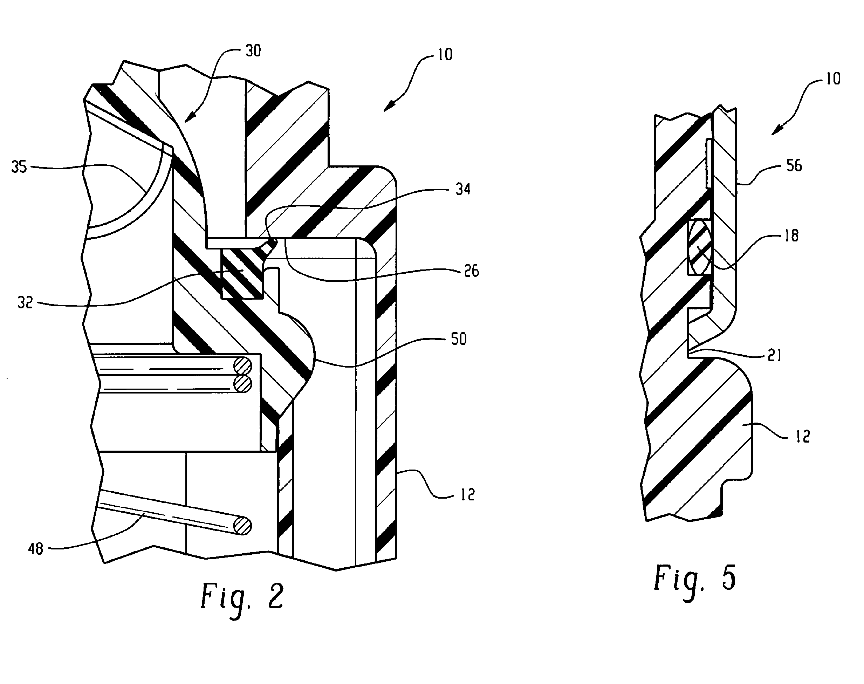

Referring to FIGS. 1 through 3, the valve assembly is indicated generally at 10 and includes a tubular body 12 having an inlet passage 14 formed in the upper end thereof with annular barbs 16 provided about the periphery adjacent to the upper end for facilitating attachment to a filler hose as will here inafter be described. The valve may include a pre-placed annular seal ring 18, preferably an elastormeric o-ring, for further insuring vapor tight sealing upon attachment to a filler hose.

The interior of the upper end of the tubular body has the plurality of vanes or deflectors 20 disposed therein and preferably formed integrally with the body which is preferably formed of plastic material The fins serve to direct a siphon hose (not shown) upon insertion of the hose through the inlet passage 14 [to one side of the valve].

The body 12 also has an annular groove 22 formed in the outer periphery thereof for facilitating attachment of a metal tank spud as will hereinafter be described.

The body has an annular valve seat 26 formed therein downstream of the inlet from the vanes 20 and further has a slot or opening 28 formed through the side wall thereof downstream of the valve seat 26.

A poppet sub assembly indicated generally at 30 includes a poppet member preferably formed of plastic material having an annular groove 24 formed therein. Groove 24 has an over molded elastormeric seal 32 preferably formed with a wiper portion 34 for resilient seating against valve seat 26.

The poppet includes on the upstream face thereof fins or vanes 35 for directing flow of fuel dispensed through the inlet 14 of the valve and for minimizing turbulence in the fuel flow.

The poppet 30 includes a downwardly extending post 36 which is guided for sliding movement in an aperture 46 formed in tower 40 of a closure or cap 38 received in the bottom end of the tubular body 12. In the presently preferred practice, the body 12 has at least one side opening 28 to direct the siphon hose downwardly within the tank when the valve is installed on a tank. Additional openings may be provided about the periphery to facilitate flow to the valve.

The cap 40 preferably has a plurality of deflectable fingers formed thereabout with barbs 40 former thereon to provide for frictional snap in engagement with circumferentially spaced slots 44 provided in the wall of the body adjacent the lower end thereof for facilitating retention of the cap in the body.

A bias spring 48 has the upper end thereof registered against the under surface of the poppet 30 and the lower end registered against cap 38 and spring 48 acts to bias the poppet upwardly in a direction to cause wiper portion 34 to seal on valve seat 26.

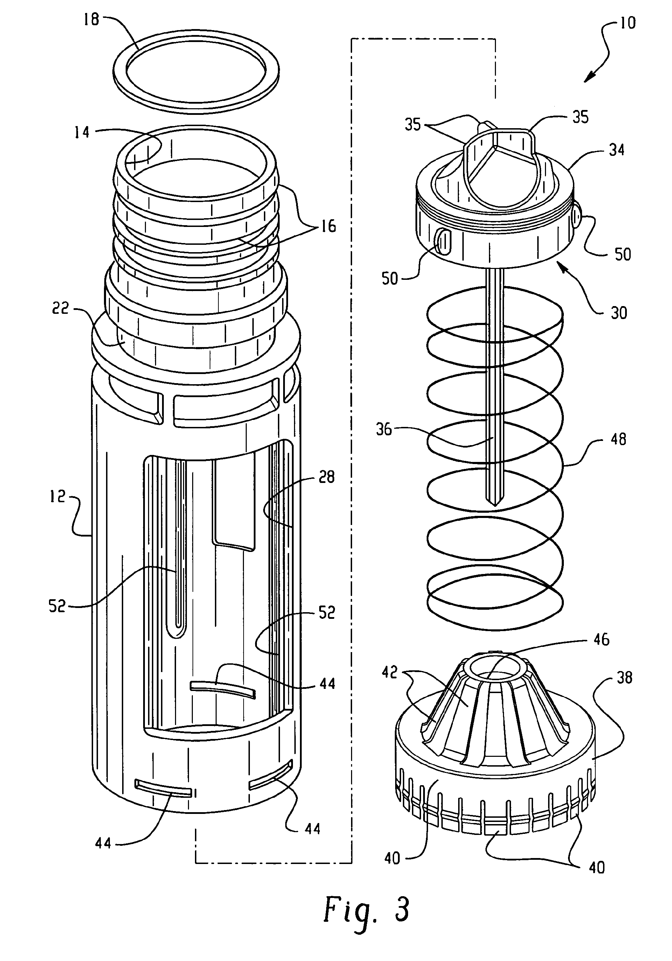

The poppet preferably has a plurality of circumferentially spaced lugs 50 provided thereon which slidably engage corresponding longitudinal grooves 52 formed in the interior of the body 12 as illustrated in FIG. 3. The sliding engagement of lugs 50 in grooves 52 serves to maintain the orientation of vanes 35. It will be understood that the lugs 50 and grooves 52 may be disposed in an irregular or asymmetric arrangement to prevent improper assembly.

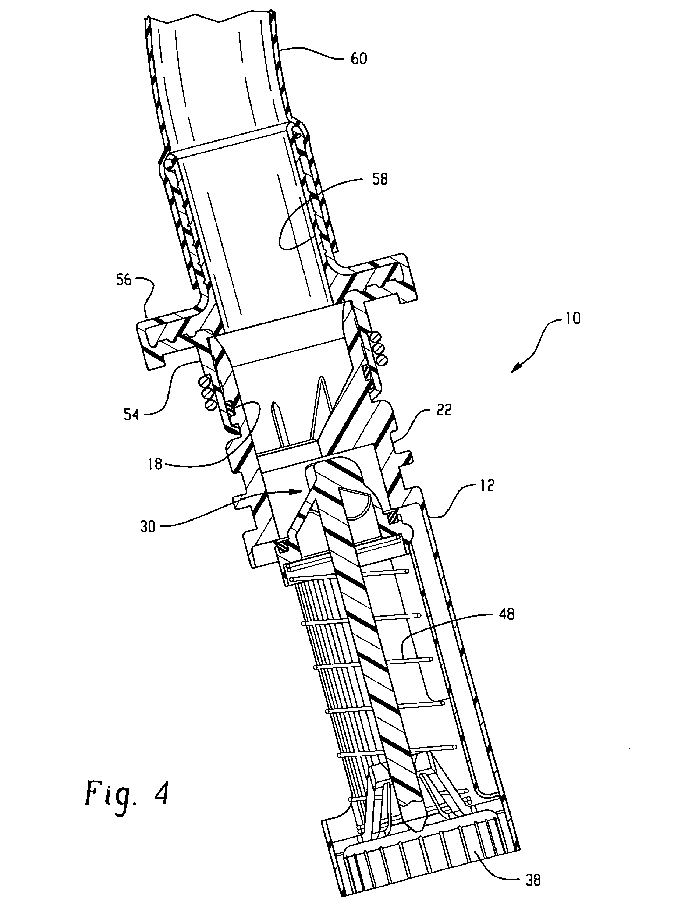

Referring to FIG. 4, the valve 10 is shown with the inlet end thereof inserted in the lower end of a plastic tank spud 54 which has outwardly extending annual flange 56 formed of material suitable for weldment to the outer surface of a plastic molded fuel tank. Preferably, the spud 54 has an inner core 58 formed of plastic material not weldable to the tank but having the properties of being resistant to liquid fuel and fuel vapor to thereby prevent fuel and vapor from contacting the weldable material. The lower end of the spud 54 is sealed over the o-ring 18 provided on the valve body. If desired a spring may be disposed about the outer periphery of the spud 54 for providing compression forces to ensure a tight seal over the barbs on the upper end of the body and the seal ring 18. The upper end of spud 54 has the downstream end of a flexible tank filler hose 60 received thereover, it being understood that the upper end (not shown) of hose 60 is attached to a nozzle-receiving fitting provided on the vehicle body structure.

Referring to FIG. 5 a portion of a view similar to FIG. 4 shows a metallic spud 56 received over the upper end of the valve body 12 sealing over seal ring 18 with the end of the spud crimped in groove 22 to retain the valve on the spud. It will be understood that the spud also has a radially outwardly extending flange (not shown) for attachment to the fuel tank by weldment.

The present invention thus provides a simple and easy to install relatively low cost one-way valve for a fuel tank filler tube and which provides for snap in engagement with either a plastic tank spud or the spud formed of metallic material and permits a complete sub assembly of the spud and filler hose ready for installation onto the tank by suitable weldment.

Although the invention has hereinabove been described with respect to the illustrated embodiments, it will be understood that the invention is capable of modification and variation and is limited only by the following claims.

## Claims

1. A siphonable filler tube valve assembly comprising:
(a) a generally tubular body with an inlet end adapted for receiving fuel upon refueling through the filler tube and an annular valve seat therein downstream of the inlet and an end distal said inlet end for attachment to a fuel tank spud;
(b) a poppet moveable between a position closing and a position opening said valve seat including means operable for biasing said valve to the closed position;
(c) an outlet opening formed in the wall of said body downstream of said valve seat;
(d) said poppet including surfaces operable to direct the end of a siphon hose inserted through said inlet end and said valve seat outwardly through said outlet as said siphon hose moves the poppet to the open position; and,
(e) said poppet having an annular flexible seal overmolded thereon for sealing against said valve seat.

2. The valve assembly defined in claim 1, wherein said surfaces operable to direct the end of a siphon hose include surfaces selected from one of flutes and vanes.

3. The valve assembly defined in claim 1, wherein said body includes a plurality of raised surfaces disposed about a portion of the interior upstream of said valve seat, and operable to deflect said end of a siphon hose toward one side of said poppet and toward said outlet opening.

4. The valve assembly defined in claim 1, wherein said overmold is formed of elastermeric material.

5. The valve assembly defined in claim 4, wherein said over mold is formed of fluorosilicone elastomer.

6. The valve assembly defined in claim 1, wherein said body includes a plurality of circumferentially spaced outlet openings formed in the wall downstream of valve seat.

7. The valve assembly defined in claim 1, wherein said poppet includes guide surfaces thereon slidably engaging corresponding surfaces on said body and operable to prevent relative rotation of said poppet with respect to said body.

8. The valve assembly defined in claim 1, wherein said poppet is formed of plastic material.

9. The valve assembly defined in claim 1, wherein said poppet includes a centrally disposed guide post slidably guided within said body.

10. The valve assembly defined in claim 1, wherein said poppet includes turbulence reducing surfaces formed on an upstream side thereof.

11. The valve assembly defined in claim 1, wherein said body distal end includes a member having surfaces thereon for snap engagement with a tank spud.

12. The valve assembly defined in claim 1, wherein said body distal end includes a guide member snap-locked thereon.

13. A method of making a filler tube valve comprising:
(a) forming a tubular body (12) having an inlet (14) in one end thereof and forming an outlet (28) opening in the wall thereof and forming an annular valve seat (26) intermediate the inlet and outlet opening;
(b) forming a poppet (30) and overmolding elastomeric material (32) thereon and forming annular sealing surface on the poppet with said overmolding;
(c) disposing said poppet in said body for movement therein and biasing said poppet in a direction to seat said annular sealing surface against said valve seat; and,
(d) forming deflecting surfaces (35) on the upstream side of said poppet for directing the end of a siphon hose through said outlet opening.

14. The method defined in claim 13, wherein said step of forming deflecting surfaces includes forming turbulence reducing surfaces.

15. The method defined in claim 14 herein said step of forming turbulence reducing surfaces includes forming a plurality of fins.

16. The method defined in claim 13, wherein said step of forming a poppet includes forming an annular groove (24) for said overmolding.

17. The method defined in claim 13, wherein said step of biasing said annular sealing surface includes disposing a coil spring (48) in contact with said poppet.

18. The method defined in claim 13, wherein said step of forming an outlet opening includes forming a plurality of openings.

19. The method defined in claim 13, wherein said step of forming a tubular body includes forming a plurality of deflecting vanes (20) internally and upstream of said valve seat.

20. The method defined in claim 13, wherein said step of forming a poppet includes forming a poppet of plastic material.

21. The method defined in claim 20, wherein said step of forming a poppet includes forming a poppet of acetyl material.

22. The method defined in claim 13, wherein said step of forming a poppet includes forming a centrally disposed guide post (36) and slidably guiding said post on said body.

23. The method defined in claim 13, wherein said step of forming a poppet includes forming surfaces (35) on an upstream side thereof for reducing turbulence.

24. The method defined in claim 23, wherein said step of forming surfaces for reducing turbulence includes forming a plurality of fins.
